# EUROPEAN PATENT APPLICATION

(11) **EP 0 571 162 A1**
(43) Date of publication of application: **24.11.1993**
(21) Application number: 93303791.3
(22) Date of filing: 17.05.1993
(51) Int. Cl.: B29C 35/08, B29C 33/38, B29C 67/14

(54) **Manufacture of articles from composite material**

(30) Priority: 16.05.1992 GB 9210525
(71) Applicant: BRITISH AEROSPACE PUBLIC LIMITED COMPANY, Farnborough, Hants. GU14 6YU (GB)
(72) Inventor: France, David, British Aerospace Defence Ltd., Balderstone, Lancashire BB2 7LF (GB); Bunting, Hedley, British Aerospace Defence Ltd., Balderstone, Lancashire BB2 7LF (GB); Booth, Derrick, British Aerospace Defence Ltd., Balderstone, Lancashire BB2 7LF (GB)
(74) Representative: Eastmond, John

(57) **Abstract**

This invention relates to moulds for the manufacture of articles from composite materials, such as carbon fibre composites. Known moulds suffer from problems of excessive weight or susceptibility to damage during use. The mould (28) according to the present invention is composed of glass (for example borosilicate), and is manufactured by causing a sheet of glass (6) to melt in a mould consisting of upper and lower components (2 and 4). Such glass mould tools allow the transmission of many types of electromagnetic radiation there through which allows the curing of the resin in composite material to occur by positioning a radiation source appropriately (Figure 1).

## Description

This invention relates to the manufacture of articles from fibre reinforced composite material such as carbon fibre composites and, more particularly, to moulds for the manufacture of such articles.

The manufacture of articles from composite materials involves laying up on a mould tool to a desired thickness successive layers of composite material, such as carbon cloth impregnated with resin. A plastic or rubber sheet (known as a vacuum bag) is then placed on top of the mould so that it covers the article completely. A type of putty is positioned around the periphery of the sheet in order to form an airtight seal with the mould. A connection between the interior of the sheet and a vacuum pump is then made so that the air between the sheet and the article may be removed so that the article may then be subjected to a uniform external high pressure during subsequent curing and forming operations. The curing and forming operations take place under pressure at high temperature in an autoclave for a predetermined, suitable period of time. When the curing process is finished, i.e. the resin has cured, the article is removed from the autoclave, the vacuum pump is disconnected, the sheet is removed and the article may then be released from the mould.

Known moulds are manufactured from either metal, such as aluminium, or from composite materials, such as carbon fibre suspended in resin. There are various problems associated with moulds of both types.

Metal moulds cause problems because of the difference between their coefficient of thermal expansion and that of the composite material from which the finished article is manufactured. This difference results in a relative movement between the mould and the article being formed during the heating and cooling cycle in the autoclave, which spoils the surface of the article in contact with the mould. Another disadvantage of using metal moulds is that they are relatively heavy which makes them difficult to handle and necessitates the use of cranes to manoeuvre the moulds and of massive support platforms to transport them to the autoclave and support them during the curing operation. The mould and the support platform absorb a large amount of heat which results in the autoclave taking a long time to reach the required curing temperature, and to cool down back to room temperature. As a consequence of this, the resin closest to the mould in the article cures at a slower rate than that at the greatest distance from it. This differential curing rate results in weak spots in the finished article, especially in areas of greatest article thickness because of the larger temperature difference in these areas. To go some way towards reducing these problems, metal moulds are made hollow with holes in the side walls which allow the circulation of air.

Moulds made from composite materials offer several advantages. Firstly, because they are made from the same or similar material to the article to be formed, the problems resulting from a coefficient of thermal expansion differential is eliminated or, at least, reduced. Secondly, composite moulds are lighter and therefore easier to handle; they also can be heated and cooled more quickly, which reduces the curing time in the autoclave.

Composite moulds comprise a layer of material, one surface of which forms the mould face (having the contours required for the finished article), and a plurality of longitudinal and transverse support walls lying substantially perpendicular to the mould face and extending from another surface of the layer at the back of the mould face. The provision of such a network of support walls is often referred to as "egg boxing".

During the manufacture of such composite moulds the exposed edges of the support walls, where the ends of the plies of the composite material are visible, are brushed with resin by hand in order to prevent them from splitting apart. Because the composite material is already pre-impregnated with resin, this hand-brushing results in an uneven distribution of resin. This speeds up the gradual break up of the composite mould which occurs every time it is heated and cooled, as well as when it is roughly handled. In order to avoid the problem of uneven resin distribution, attempts have been made to manufacture solid composite moulds comprising layer upon layer of mutually orthogonal fibre plies. Clearly, as well as being extremely labour intensive, it is very difficult to obtain the desired contour of the mould face with any degree of accuracy.

A serious drawback of all moulds made with composite materials is that they are very susceptible to damage, for example from implements such as screwdrivers which are used to remove the cured articles from the mould tool, and from knife damage caused by operators cutting material on the mould tool.

One object of the present invention is to provide a mould tool which is less susceptible to the type of damage which composite mould tools often sustain, as described above.

Another object is to provide a mould tool which is lighter, which has a coefficient of thermal expansion that is much closer to that of the composite material of the articles to be manufactured, and which is a better conductor of heat than conventional metal mould tools.

It is a further object to provide a mould tool which allows the transmission of electromagnetic radiation there through, which radiation may be used in the curing process.

It is yet another object of the invention to provide a relatively low cost method and apparatus for the manufacture of mould tools for producing articles from composite materials.

According to one aspect of the present invention there is provided a mould tool for the manufacture of articles from composite material, characterised in that the mould tool is composed of glass. Preferably the glass is borosilicate.

According to another aspect of the invention there is provided apparatus for the manufacture of a glass mould tool for use in the manufacture of articles from composite material, characterised in that the apparatus includes a mould having a surface configuration which corresponds to the shape required for the mould tool; means for locating a glass sheet, from which the mould tool will be formed, on said mould; means for heating said glass sheet; and means for applying pressure to said glass sheet to cause the sheet to be pressed against the mould surface, thereby forming said glass mould tool. The mould used to manufacture the glass mould tool may conveniently be composed of graphite or ceramic, for example.

According to a further aspect of the invention, there is provided a method of manufacturing a glass mould tool for use in the manufacture of articles from composite material, characterised in that the method includes the steps of positioning a sheet of glass, from which the mould tool will be formed, on a mould having a surface configuration which corresponds to the shape required for the mould tool; heating said glass sheet; and applying pressure to said glass sheet to cause same to be pressed against the mould surface, thereby forming said mould tool. During manufacture, the glass sheet may conveniently be heated to substantially 750°C.

According to another aspect of the invention there is provided a method of manufacturing an article using a glass mould tool of the type described above, or one as manufactured by the apparatus or by the method described above, characterised in that the method of manufacturing the article includes the steps of placing a layer of uncured composite material on the glass mould tool, and curing said composite material by the transmission of electromagnetic radiation through said glass mould tool. Curing by this method was not possible with prior art mould tools; it provides an alternative to, or method of augmenting, curing in an autoclave.

According to a further aspect of the invention there is provided an article characterised in that the article is manufactured by the method described in the preceding paragraph.

For a better understanding of the invention, an embodiment of it will now be described by way of example only, and with reference to the accompanying drawings, of which:
Figure 1 shows an exploded view of the components of a mould between which a sheet of glass to be formed is positioned:
Figure 2 shows a cross-sectional view of the assembly of Figure 1 taken along the line A-A;
Figure 3 shows a part cross-sectional view of the assembly of Figure 1 taken along the line B-B;
Figure 4 shows an overhead plan view of the lower component of the mould;
Figure 5 shows a perspective view of a formed glass mould tool; and
Figure 6 is a cross-sectional view of an article being manufactured using the mould tool.

To improve understanding of the drawings, like elements which appear in more than one figure are designated by the same reference number.

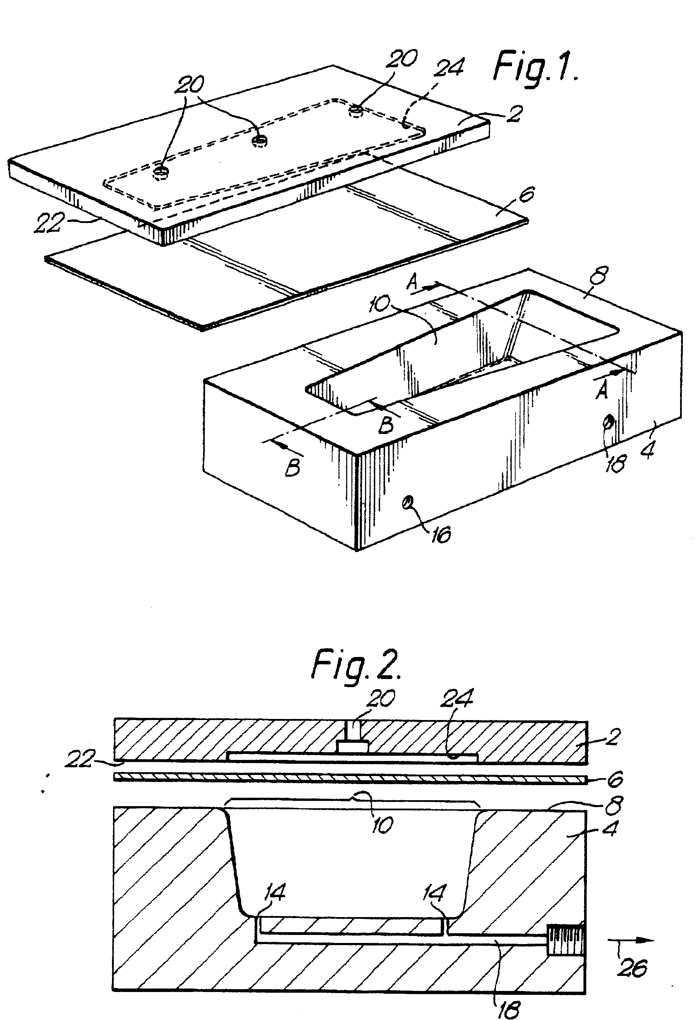

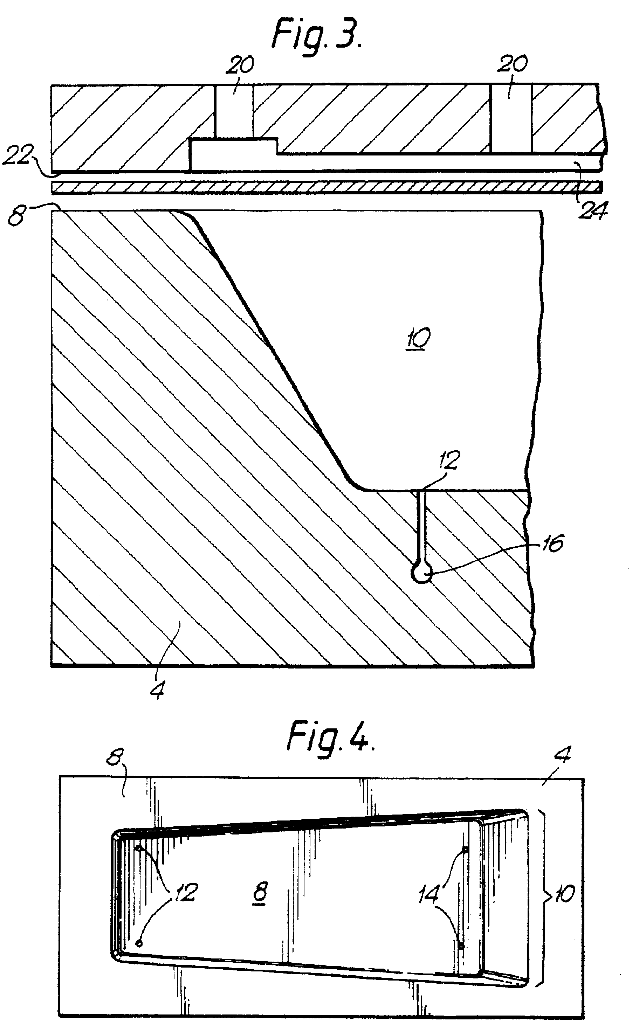

Figures 1, 2 and 3 show a mould (made of graphite or ceramic, for example) comprising an upper component 2 and lower component 4, between which a sheet of borosilicate glass 6 is positioned. The mould face 8 of the lower component 4 has a surface configuration which includes a recess 10 which corresponds to the shape required for a mould tool to be manufactured from the glass sheet 6. The recessed portion 10 of the mould face 8 includes two pairs of outlets 12 and 14 of respective gas communication channels 16 and 18 which are formed in the lower component 4.

The upper component 2 of the mould tool includes three vent holes 20 which pass there through. The lower surface 22 of the upper component 2 includes a recess 24 which corresponds in length and width to the recess 10 in the lower component 4.

When it is desired to manufacture a glass mould tool, the glass sheet 6 is positioned between the upper and lower components 2 and 4 of the mould such that the connections between the elements are gas-tight. The mould is heated to a temperature at which the glass sheet 6 begins to melt (approximately 750°C in the case that borosilicate glass is used). As the glass melts, it slowly takes the approximate shape of the recess 10 in the lower component 4 due, initially, to gravity. The forming process is finished by applying a vacuum to the two gas communication channels 16 and 18 as indicated by arrow 26 on figure 2. The vent holes 20 and recess 24 in the upper component 2 allow air from the surrounding atmosphere to be drawn into the mould as the glass sheet 6 takes the shape of the recess 10.

When the glass sheet 6 has taken the shape required for the mould tool which is being manufactured, the mould assembly is allowed to cool, whereupon the formed glass 6 may be removed.

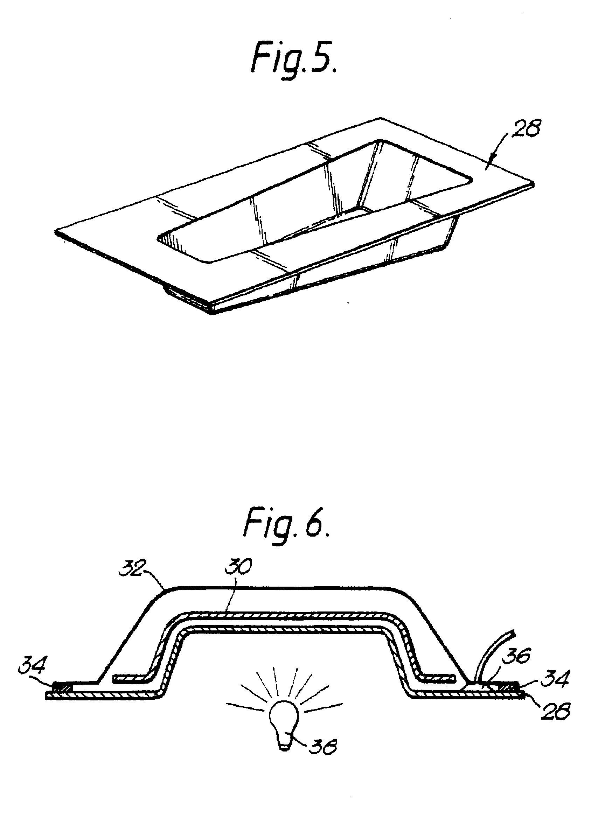

Figure 5 shows a glass mould tool 28 formed from the glass sheet 6 by the process described above.

Figure 6 illustrates an example of the manufacture of a composite article using the glass mould tool 28. A layer of uncured composite material 30 is positioned on the glass mould tool 28; the material is soft and takes the approximate shape of the mould. A vacuum bag 32 is then positioned over the composite material 30 and gas-tightedly sealed around its periphery to the mould tool 28 using sealing putty 34. A vacuum point attachment 36 to the mould tool 28 facilitates by means of a vacuum pump connected thereto (not shown) the application of pressure. When pressure is applied the composite material 30 takes the shape of the mould tool 28.

The composite material 30 may be cured either in an autoclave in the conventional manner or, alternatively (or additionally), by using an electromagnetic radiation source 38 positioned so that the radiation is transmitted through the glass mould tool 28 thereby causing the resin of the composite material 30 to cure. possible examples of suitable electromagnetic radiation sources are microwave emitters and halogen lamps.

In the event that the curing process involves the heating of the mould tool 28, the comparatively good heat conductivity of glass ensures efficiency. Furthermore, the low coefficient of thermal expansion of glass (close to that of the composite material 30, from which the article is made) reduces the adverse effects of relative movement between the material 30 and the mould tool 28.

Although an embodiment has been described in relation to the forming of a mould tool from borosilicate glass, many other types of hard glass could also be used to manufacture suitable mould tools.

## Claims

1. A mould tool for the manufacture of articles from composite material, characterised in that the mould tool (28) is composed of glass.

2. A mould tool according to claim 1, characterised in that said glass is borosilicate.

3. Apparatus for the manufacture of a glass mould tool for use in the manufacture of articles from composite material, characterised in that the apparatus includes a mould (2,4) having a surface configuration which corresponds to the shape required for the mould tool; means (8) for locating a glass sheet (6) from which the mould tool will be formed, on said mould; means for heating said glass sheet; and means for applying pressure (26) to said glass sheet to cause the sheet to be pressed against the mould surface, thereby forming said mould tool (28).

4. Apparatus according to claim 3, characterised in that said mould (2,4) is composed of graphite.

5. Apparatus according to claim 3, characterised in that said mould (2,4) is composed of ceramic.

6. A method of manufacturing a glass mould tool for use in the manufacture of articles from composite material, characterised in that the method includes the steps of positioning a sheet of glass (6), from which the mould tool (28) will be formed, on a mould (2,4) having a surface configuration (10) which corresponds to the shape required for the mould tool (28); heating said glass sheet (6): and applying pressure (26) to said glass sheet (6) to cause same to be pressed against the mould surface (10), thereby forming said mould tool (28).

7. A method according to claim 6, characterised in that said glass sheet (6) is heated to substantially 750°C.

8. A method of manufacturing an article using a glass mould tool as claimed in claim 1 or claim 2, or as manufactured using apparatus as claimed in any one of claims 3 to 5 or by the methods as claimed in claim 6 or claim 7, characterised in that the method includes the steps of placing a layer of uncured composite material (30) on the mould tool (28), and curing said composite material (30) by the transmission of electromagnetic radiation (38) through said mould tool (28).

9. An article characterised in that it is manufactured by the method as claimed in claim 8.
